# EUROPEAN PATENT SPECIFICATION

(11) **EP 1 852 842 B1**
(45) Date of publication and mention of the grant of the patent: **01.12.2010**
(21) Application number: 07107082.5
(22) Date of filing: 27.04.2007
(51) Int. Cl.: G09F 3/10, C09J 7/04, B32B 7/06

(54) **Adhesive layer and self-adhesive fabric provided with such an adhesive layer**
Kleberschicht und Gewebeklebstoff
Couche adhesive et tissu adhesif

(30) Priority: 02.05.2006 BE 200600257
(43) Date of publication of application: 07.11.2007
(73) Proprietor: Snailtex.Com, 8830 Hooglede (BE)
(72) Inventor: DEBRUYNE, Filip, 8830, HOOGLEDE (BE); DEBRUYNE, Johan, 8830, HOOGLEDE (BE); VAN PARYS, Marc, 9800, DEINZE (BE); GAREZ, Ilse, 9051, SINT-DENIJS-WESTREM (BE); DECEUNINCK, Linda, 9000, GENT (BE)
(74) Representative: Ostyn, Frans

(56) References cited:
- WO-A-99/22935
- US-A- 3 632 547

## Description

This invention relates firstly to an adhesive layer provided for application to a fabric so as to render this fabric self-adhesive. Secondly, this invention relates to a self-adhesive fabric for publicity purposes provided with such an adhesive layer.

This invention relates in particular to a label comprising a fabric provided on a carrier material.

In the publicity sector it is known to apply self-adhesive films (usually on a PVC basis) with one-sided printing to windows of buildings, vehicles and the like. These films are usually printed by means of conventional and digital printing systems using inks on a solvent basis.

However, the known films are rather expensive, prices varying between 50 and 80 €/m². Furthermore, the known films are very difficult to remove once they are affixed and adhesive residues are left behind on the substrate after film removal. Moreover, these films lose a great deal of adhesive power after their first use, so that they can be used only once. In view of these drawbacks, there is currently much demand for and interest in a cheaper and better alternative.

The aim of the invention therefore is to provide an adhesive layer, the fabric to which this adhesive layer is applied being reusable and this adhesive layer, once provided on the fabric, not leaving any stains on the substrate after use.

The aim of the invention is achieved by providing an adhesive layer provided for application to a fabric so as to render this fabric self-adhesive, relative to the total adhesive composition, the adhesive layer being composed of:
- from 26 to 46% water, preferably from 30 to 40% water;
- from 0.02 to 0.08% defoamer, preferably from 0.04 to 0.06% defoamer;
- from 10 to 30% polyurethane emulsion, preferably from 15 to 25% polyurethane emulsion;
- from 20 to 40% thermoplastic acrylic polymer, preferably from 25 to 35% thermoplastic acrylic polymer;
- from 2 to 20% plasticiser on a silicone basis, preferably from 7 to 15% plasticiser on a silicone basis;
- from 1 to 4% thickening agent, preferably from 2 to 3% thickening agent.

In a preferred embodiment of the adhesive layer according to the invention the dry matter content of the adhesive layer lies between 24 and 44%. The dry matter content of the adhesive layer preferably lies between 28 and 36%. In particular, the dry weight of the adhesive layer lies between 40 and 60 g/m². According to a special embodiment, said adhesive layer is temperature resistant up to 210°C, more particularly the adhesive layer is temperature resistant in the range between 150°C and 210°C.

This invention further relates to a self-adhesive fabric provided with the above-described adhesive layer. Said fabric is preferably woven, knitted or a non-woven. More particularly, said fabric is based on polyester or polyamide.

The adhesive layer has good adhesive properties, so that the fabric can be affixed to almost all smooth surfaces, such as for instance glass, metal, wood, natural stone, laminates, smooth painted walls, coated products, etc.

Such self-adhesive fabrics are suitable for both inside and outside applications. These fabrics are easily detachable and leave no adhesive residues behind.

In a more particular embodiment of the self-adhesive fabric according to the invention, the fabric can be printed on at least one side. Preferably, said fabric is provided with a printed layer. Since the adhesive layer used is temperature resistant up to 210°C, the self-adhesive fabric according to the invention can be printed with textile printing inks that must be thermofixed at 150 to 210°C after printing (for instance by means of a calender treatment, infrared element, hot air or another known technique). The adhesive layer of the "adhesive textiles" known until now is not temperature resistant, as a result of which the above-mentioned thermofixation technique cannot be applied to these products.

Another subject of this patent application relates to a label comprising a fabric provided on a carrier material, said fabric being a self-adhesive fabric according to any one of Claims 5 to 7 provided with an adhesive layer according to any one of Claims 1 to 4.

The adhesive layer is provided between the carrier material and said fabric. The label is characterised in that said adhesive layer comprises a water-soluble coating for detachable attachment of the fabric to a surface. Detachable is understood to mean that the fabric can be removed in a simple and fast manner from the surface to which it was attached, without leaving any adhesive residues.

In a particularly advantageous embodiment of the label according to the invention, the carrier material is silicone paper of which the weight lies between 80 and 140 g/m².

In the following detailed description the aforementioned characteristics and advantages of the adhesive layer, the self-adhesive fabric provided with such an adhesive layer and the label according to the invention are explained further. The sole purpose of this description is to explain the general principles of this invention, so that nothing in this description can be interpreted as a limitation of the field of application of the invention or of the patent rights claimed in the claims.

The label according to the invention comprises a fabric provided on a carrier material, with an adhesive layer being provided between the carrier material and said fabric, said adhesive layer comprising a water-soluble coating for detachable attachment of the fabric to a surface. It is desired in particular for this label to be a counterpart of the adhesive films already known that are used for temporary applications in the publicity sector and that exhibit various drawbacks (such as, for instance, difficult to apply, high cost price, very difficult to remove and not resistant to high temperatures (exceeding 150°C)).

The major advantage of this invention is that the carrier material with the adhesive layer can be applied both before and after printing (or other after-treatments). The known adhesive films ("adhesive textiles") are all provided in advance with an adhesive layer and are printed only at a later stage, while in addition one of their characteristics is that they are not temperature resistant. This invention has the advantage that all types of textiles can be provided with such an adhesive layer.

The adhesive layer according to the invention has good adhesive properties on almost all smooth surfaces (for instance glass, metal, wood, natural stones, laminates, smooth painted walls, coated products, etc.). Thanks to this unique adhesive layer, the fabric can be reused as the fabric can simply be removed from these surfaces without the use of water or solvents. Furthermore, no adhesive residues are left behind on the surface to which the fabric was attached.

In a preferred embodiment the adhesive layer is composed of water (36.3%), defoamer (0.05%), polyurethane emulsion (20.2%), thermoplastic acrylic polymer (30.3%), plasticiser on a silicone basis (10.1%) and thickening agent (2.7%). The stated quantities may deviate by about 10% depending on the application. The adhesive layer is transparent and eminently suitable for light materials such as voiles, knitted polyesters, etc.

The above-mentioned adhesive layer is applied by means of a squeegee, a calender, a transfer or a pressure roller and allowed to dry on the carrier material. The carrier material preferably is silicone paper with a weight that may vary between 80 and 140 g/m² depending on the application. The silicone layer has different compositions and thicknesses on the recto and verso sides of the paper. This prevents the applied adhesive layer from adhering to both the recto and the verso side of the paper when it is rolled up. The fabric can also be provided directly with an adhesive layer, so that the paper need only be siliconised on one side.

The fabric can be prepared on the basis of natural fibres, synthetic fibres or a combination of both, and in a preferred embodiment it is prepared on the basis of polyester or polyamide, is either provided with the described adhesive layer after being printed (and any other after-treatments) or can be printed directly if the adhesive layer is already provided on the textile. The adhesive layer can be applied both to the recto and to the verso side of the fabric, depending on the application.

To obtain the self-adhesive fabric that can be applied to a well-defined surface, the fabric is heated together with the carrier material. By means of pressure (for instance via a calender or rolls) the adhesive layer will be transferred from the carrier material to the fabric. The conditions for this thermofixation are as follows:
- minimum temperature 150°;
- minimum duration 30 seconds;
- minimum pressure 2 bar.

After this treatment, the carrier material can easily be removed and the self-adhesive fabric obtained can be applied to a surface. After use, the self-adhesive fabric can be kept on the carrier material. This prevents dust etc. from adhering to the adhesive layer (when not used).

When using the label according to the invention, attention should be paid to several matters:
- the surface to which the fabric is applied should be free of dust, grease, etc.;
- the surface to which it is to be adhered should be smooth and dry;
- during affixing, the carrier material must be carefully detached from the fabric on one side. The detached fabric is to be affixed to the surface and subsequently the rest of the carrier material is to be removed while the released self-adhesive fabric is pressed down;
- after use, the self-adhesive fabric can be reapplied to the carrier material.

## Claims

1. Adhesive layer provided for application to a fabric so as to render this fabric self-adhesive, **characterised in that**, relative to the total adhesive composition, the adhesive layer is composed of
- from 26 to 46% water;
- from 0.02 to 0.08% defoamer;
- from 10 to 30% polyurethane emulsion;
- from 20 to 40% thermoplastic acrylic polymer;
- from 2 to 20% plasticiser on a silicone basis;
- from 1 to 4% thickening agent.

2. Adhesive layer according to Claim 1, **characterised in that** the dry matter content of the adhesive layer lies between 24 and 44%.

3. Adhesive layer according to Claim 1 or 2, **characterised in that** the dry weight of the adhesive layer lies between 40 and 60 g/m².

4. Adhesive layer according to any one of the preceding claims, **characterised in that** said adhesive layer is temperature resistant up to 210°C.

5. Self-adhesive fabric provided with an adhesive layer, **characterised in that** said fabric is provided with an adhesive layer according to any one of Claims 1 to 4.

6. Self-adhesive fabric according to Claim 5, **characterised in that** said fabric is woven, knitted or a non-woven.

7. Self-adhesive fabric according to Claim 5 or 6, **characterised in that** the fabric can be printed on at least one side.

8. Label comprising a fabric provided on a carrier material, **characterised in that** said fabric is a self-adhesive fabric according to any one of Claims 5 to 7 provided with an adhesive layer according to any one of Claims 1 to 4.

9. Label according to Claim 8, **characterised in that** the carrier material is silicone paper of which the weight lies between 80 and 140 g/m².

## Patentansprüche

1. Klebstoffschicht zum Aufbringen auf ein textiles Flächengebilde, um das textile Flächengebilde selbstklebend zu machen, **dadurch gekennzeichnet, dass** die Klebstoffschicht in Bezug auf die Gesamtzusammensetzung des Klebstoffs aus
- 26 bis 46 % Wasser
- 0,02 bis 0,08 % Entschämnungsmittel
- 10 bis 30 % Polyurethanemulsion
- 20 bis 40 % thermoplantisches Acrylpolymer
- 2 bis 20 % Weichmacher auf Silikonbasis
- 1 bis 4 % Verdickungsmittel
besteht.

2. Klebstoffschicht nach Anspruch 1, **dadurch gekennzeichnet, dass** der Trockensubstanzgehalt der Klebstoffschicht zwischen 24 und 44 % liegt.

3. Klebstoffschicht nach Anspruch 1 oder 2, **dadurch gekennzeichnet, dass** das Trockengewicht der Klebstoffschicht zwischen 40 und 60 g/m² liegt.

4. Klebstoffschicht nach einem der vorangehenden Ansprüche, **dadurch gekennzeichnet, dass** die Klebstoffschicht bis zu einer Temperatur von 210 °C temperaturbeständig ist.

5. Selbstklebendes textilen Flächengebilde mit einer Klebstoffschicht, **dadurch gekennzeichnet, dass** das textile Flächengebilde mit einer Klebstoffschicht nach einem der Ansprüche 1 bis 4 versehen ist.

6. Selbstklebendes textiles Flächengebilde nach Anspruch 5, **dadurch gekennzeichnet, dass** es sich bei dem textilen Flächengebilde um ein gewebtes textiles Flächengebilde, ein gestricktes textiles Flächengebilde oder um einen Vliesstoff handelt.

7. Selbstklebendes textiles Flächengebilde nach Anspruch 5 oder 6, **dadurch gekennzeichnet, dass** das textile Flächengebilde auf wenigstens einer Seite bedruckt werden kann.

8. Aufkleber umfassend ein textiles Flächengebilde, das auf einem Trägermaterial angeordnet ist, **dadurch gekennzeichnet, dass** es sich bei dem textilen Flächengebilde um ein selbstklebendes textiles Flächengebilde nach einem der Ansprüche 5 bis 7 handelt, das mit einer Klebstoffschicht nach einem der Ansprüche 1 bis 4 versehen ist.

9. Aufkleber nach Anspruch 8, **dadurch gekennzeichnet, dass** es sich bei dem Trägermaterial um ein Silikonpapier handelt, dessen Gewicht zwischen 80 und 140 g/m² liegt.

## Revendications

1. Couche adhésive prévue pour être appliquée sur un tissu de façon à rendre ce tissu autocollant, **caractérisée en ce que**, relativement à la composition adhésive totale, la couche adhésive se compose :
- de 26 à 46 % d'eau ;
- de 0,02 à 0,08 % d'antimousse ;
- de 10 à 30 % d'émulsion de polyuréthane ;
- de 20 à 40 % de polymère acrylique thermoplastique
- de 2 à 20 % de plastifiant à base de silicone ;
- de 1 à 4 % d'agent épaississant.

2. Couche adhésive selon la revendication 1, **caractérisée en ce que** la teneur en matière sèche de la couche adhésive est de 24 à 44 %.

3. Couche adhésive selon la revendication 1 ou 2, **caractérisée en ce que** le poids sec de la couche adhésive est de 40 à 60 g/m².

4. Couche adhésive selon l'une quelconque des revendications précédentes, **caractérisée en ce que** ladite couche adhésive est résistante à une température jusqu'à 210 °C.

5. Tissu autocollant pourvu d'une couche adhésive, **caractérisé en ce que** ledit tissu est pourvu d'une couche adhésive selon l'une quelconque des revendications 1 à 4.

6. Tissu autocollant selon la revendication 5, **caractérisé en ce que** ledit tissu est tissé, tricoté ou non tissé.

7. Tissu autocollant selon la revendication 5 ou 6, **caractérisé en ce que** le tissu peut être imprimé sur au moins un côté.

8. Étiquette comprenant un tissu fourni sur un matériau de support, **caractérisée en ce que** ledit tissu est un tissu autocollant selon l'une quelconque des revendications 5 à 7 pourvu d'une couche adhésive selon l'une quelconque des revendications 1 à 4.

9. Étiquette selon la revendication 8, **caractérisée en ce que** le matériau de support est un papier de silicone ayant un grammage de 80 à 140 g/m².
